# DEMANDE DE BREVET EUROPEEN

(11) **EP 1 426 262 A1**
(43) Date de publication de la demande: **09.06.2004**
(21) Numéro de dépôt: 03300147.0
(22) Date de dépôt: 13.10.2003
(51) Int. Cl.: B61D 1/06, B62D 31/04

(54) **Voiture à deux niveaux pour véhicule ferrovaire**

(30) Priorité: 24.10.2002 FR 0213292
(71) Demandeur: Alstom, 75116 Paris (FR)
(72) Inventeur: Devulder, Guy, 59990 Estreux (FR)
(74) Mandataire: de Lambilly Delorme, Marie Pierre

(57) **Abrégé**

Voiture à deux niveaux pour véhicule ferroviaire comportant une caisse (1) munie d'un plancher intermédiaire (10) réalisant la séparation entre un étage inférieur et un étage supérieur, caractérisé en ce que ledit plancher intermédiaire (10) est un plancher constitué d'un plan inférieur (10a) et d'un plan supérieur (10b) décalés verticalement l'un par rapport à l'autre et reliés entre eux par une pièce de jonction (10c), les plans inférieur (10a) et supérieur (10b) s'étendant longitudinalement à la caisse (1) et comportant chacun un bord latéral relié à une paroi latérale de ladite caisse (1) et en ce que le plan inférieur (10a) est raccordé à un escalier (5) par au moins une de ses extrémités longitudinales, une estrade (11) supportant des sièges étant rapportée sur le plan inférieur (10a) en bordure de la paroi latérale de la caisse (1), ladite estrade (11) possédant une longueur et une largeur respectivement inférieures à la longueur et la largeur du plan inférieur (10a) de manière à ménager un couloir de circulation entre l'estrade (11) et la pièce de jonction (10c) du plancher (10) ainsi qu'une surface d'échange entre l'extrémité longitudinale de l'estrade (11) et l'escalier (5).

## Description

L'invention se rapporte à une voiture à deux niveaux pour véhicule ferroviaire et plus particulièrement à une voiture comportant une caisse munie d'un plancher intermédiaire réalisant la séparation entre un étage inférieur et un étage supérieur.

Il est connu, du document US 2 633 090, une voiture à deux niveaux pour véhicule ferroviaire comportant une caisse munie d'un plancher intermédiaire comprenant une face inférieure plane et intégrant au niveau de sa face supérieure deux caissons s'étendant latéralement en bordure de la caisse, les deux caissons étant séparés par un espace formant un couloir de circulation et présentant un plan supérieur servant de support pour des sièges. Un tel plancher intermédiaire présente l'inconvénient d'être complexe à réaliser et à assembler sur la caisse du véhicule. De plus, il est nécessaire, avec un tel plancher intermédiaire, de prévoir des découpes dans les caissons du plancher pour permettre le raccordement à un escalier et de prévoir la mise en place de barrières de sécurité sur une grande partie du pourtour de l'ouverture donnant sur l'escalier, ce qui augmente le coût de fabrication de la voiture. Enfin, une telle voiture présente l'inconvénient d'offrir une hauteur sous plafond limitée dans les couloirs de circulation des niveaux inférieur et supérieur étant donné que la hauteur hors tout de la voiture est limitée par le gabarit que doit respecter le véhicule ferroviaire pour pouvoir notamment circuler dans les tunnels de la voie ferrée.

Aussi, un but de la présente invention est de proposer une voiture à deux niveaux pour véhicule ferroviaire possédant une structure simple et économique à réaliser et à assembler, qui permette un raccordement optimisé entre le plancher intermédiaire et les escaliers d'accès, tout en offrant une hauteur sous plafond optimisée dans les couloirs de circulation des deux niveaux de la voiture.

A cet effet, l'invention a pour objet une voiture à deux niveaux pour véhicule ferroviaire comportant une caisse munie d'un plancher intermédiaire réalisant la séparation entre un étage inférieur et un étage supérieur, caractérisé en ce que le plancher intermédiaire est un plancher constitué d'un plan inféricur et d'un plan supérieur décalés verticalement l'un par rapport à l'autre et reliés entre eux par une pièce de jonction, les plans inférieur et supérieur s'étendant longitudinalement à la caisse et comportant chacun un bord latéral relié à une paroi latérale de ladite caisse et en ce que le plan inférieur est raccordé à un escalier par au moins une de ses extrémités longitudinales, une estrade supportant des sièges étant rapportée sur le plan inférieur en bordure de la paroi latérale de la caisse, l'estrade possédant une longueur et une largeur respectivement inférieures à la longueur et la largeur du plan inférieur de manière à ménager un couloir de circulation entre l'estrade et la pièce de jonction du plancher ainsi qu'une surface d'échange entre l'extrémité longitudinale de l'estrade et l'escalier.

Selon des modes particuliers de réalisation, la voiture à deux niveaux selon l'invention peut comprendre l'une ou plusieurs des caractéristiques suivantes prises isolément ou selon toutes les combinaisons techniquement possibles :
- les plans inférieur et supérieur du plancher intermédiaire s'étendent longitudinalement sur une même longueur ;
- l'estrade possède une face supérieure disposée à la même hauteur que le plan supérieur du plancher intermédiaire ;
- des sièges sont fixés directement sur le plan supérieur du plancher intermédiaire et des sièges de structure identique sont fixés parallèlement sur l'estrade ;
- au niveau de l'étage inférieur, au moins une rangée de sièges est prévue en bordure de la paroi latérale de la caisse adjacente au plan supérieur du plancher intermédiaire et un couloir de circulation est également prévu dans la zone située sous le plan supérieur du plancher intermédiaire ;
- la largeur du plan inférieur est égale à la largeur du plan supérieur ;
- la largeur du plan inférieur est supérieure à la largeur du plan supérieur et la largeur de l'estrade est égale à la largeur du plan supérieur ;
- les deux extrémités longitudinales du plan inférieur du plancher intermédiaire sont reliées à un escalier d'accès s'étendant rectilignement en bordure de la paroi latérale de la caisse ;
- la voiture comporte un palier à partir duquel partent l'escalier d'accès à l'étage supérieur et un escalier d'accès à l'étage inférieur, ceux-ci étant chacun disposés en bordure d'une paroi latérale la caisse.

On comprendra mieux les buts, aspects et avantages de la présente invention, d'après la description donnée ci-après d'un mode particulier de réalisation de l'invention et d'une variante, présentés à titre d'exemple non limitatif, en se référant aux dessins annexés, dans lesquels :
- la figure 1 est une vue générale de côté d'une voiture à deux niveaux selon un mode particulier de réalisation de l'invention ;
- la figure 2 est une vue, en perspective partiellement arrachée, d'un tronçon de la voiture de la figure 1 ;
- la figure 3 est une vue en coupe de l'étage supérieur de la voiture selon la ligne III-III de la figure 1 ;
- la figure 4 est une vue en coupe de l'étage inférieur de la voiture selon la ligne IV-IV de la figure 1 ;
- la figure 5 est une section transversale selon la ligne V-V de la voiture de la figure 3 ;
- la figure 6 est vue similaire à la figure 5 illustrant une variante de réalisation de la voiture à deux niveaux selon l'invention.

Pour faciliter la lecture du dessin, seuls les éléments nécessaires à la compréhension de l'invention ont été représentés. Les mêmes éléments portent les mêmes références d'une figure à l'autre.

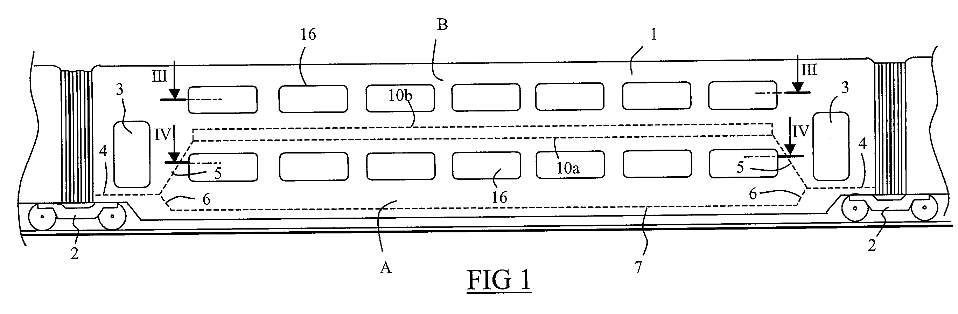

La figure 1 représente une vue générale d'une voiture à deux niveaux pour véhicule ferroviaire conforme à l'invention. La voiture comporte une caisse 1 reposant sur deux bogies 2 et comportant à proximité de chacune de ses extrémités longitudinales une porte 3 d'accès se trouvant sensiblement au niveau d'un quai d'embarquement lorsque la voiture est arrêtée dans une gare de voyageurs. La voiture comporte, dans le prolongement de chaque porte 3, un palier 4 à partir duquel partent un escalier 5 d'accès à un étage supérieur B et un escalier 6 d'accès à un étage inférieur A.

L'étage inférieur A est pourvu d'un plancher 7 plan et est séparé de l'étage supérieur B par un plancher intermédiaire 10 autoportant disposé sensiblement à mi-hauteur de la caisse 1. Le plancher intermédiaire 10 constitue le plafond de l'étage inférieur A et s'étend latéralement sur toute la largeur de la caisse 1 et longitudinalement entre les escaliers 5 disposés aux deux extrémités de la caisse 1. La caisse 1 est munie de manière classique d'une rangée de fenêtres 16 au niveau des étages inférieur A et supérieur B.

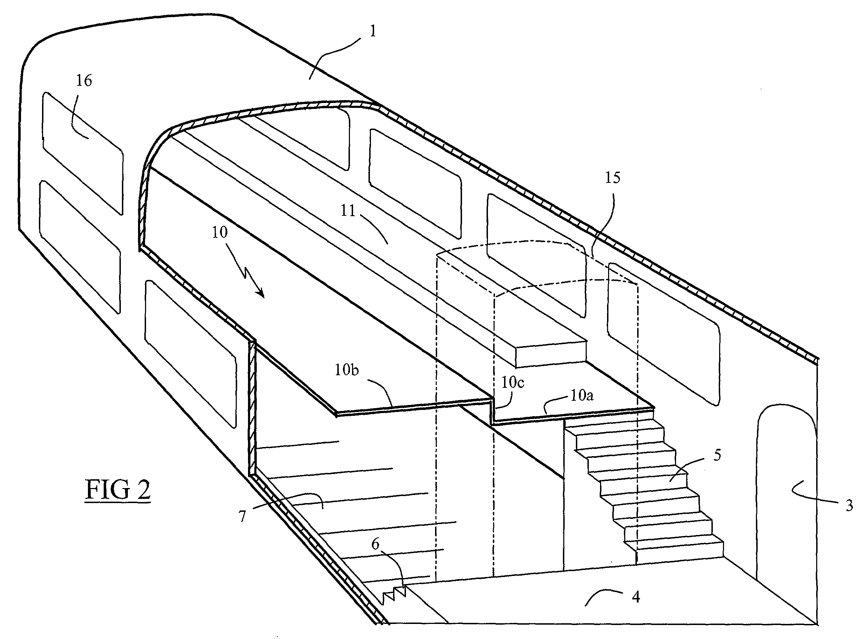

La figure 2 est une vue en perspective, partiellement arrachée, d'un tronçon de la voiture sur laquelle les équipements tels que les sièges, cloisons de séparation ou portes coulissantes n'ont pas été représentés pour plus de clarté. Conformément à cette figure, le plancher intermédiaire 10 autoporteur est constitué de deux plans, inférieur 10a et supérieur 10b, décalés verticalement l'un par rapport à l'autre et reliés entre eux par une pièce de jonction 10c s'étendant verticalement, l'ensemble de ces éléments de structure du plancher intermédiaire 10 étant avantageusement constitués de tôles soudées entre elles. Les deux plans inférieur 10a et supérieur 10b s'étendent sur une même longueur, parallèlement au plancher 7 de l'étage inférieur A, et possèdent une largeur identique de sorte que la pièce de jonction 10c est centrée sur l'axe longitudinal de la voiture. Les plans inférieur 10a et supérieur 10b comportent chacun un bord adjacent avec une paroi latérale de la caisse 1 permettant la fixation du plancher intermédiaire 10 à la caisse 1, par exemple par soudage.

Les escaliers 5 et 6 s'étendent de manière rectiligne en bordure de la paroi latérale de la caisse 1 et chaque escalier 5 est raccordé par son extrémité supérieure directement au bord du plan inférieur 10a du plancher intermédiaire 10. La largeur des escaliers 5 et 6 est avantageusement inférieure à la largeur du plan inférieur 10a de sorte qu'il résulte un espace entre les escaliers 5 et 6 pour recevoir par exemple un local technique 15 représenté en trait mixte sur la figure 2.

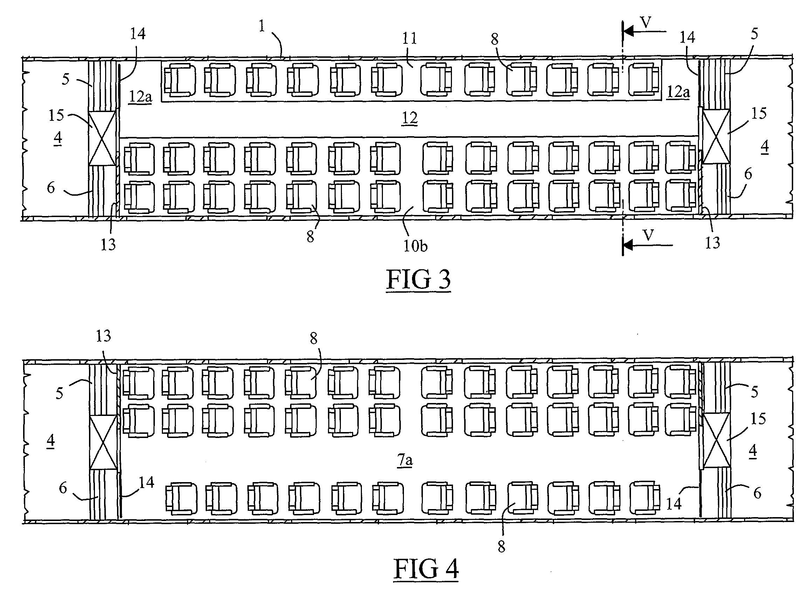

Conformément aux figures 2 et 3, une estrade 11 présentant la forme d'un parallélépipède rectangle est rapportée sur le plan inférieur 10a, cette estrade 11 s'étendant longitudinalement le long de la paroi latérale de la caisse 1. L'estrade 11 possède une largeur inférieure à celle du plan inférieur 10a de sorte qu'il résulte un couloir de circulation 12 entre l'estrade 11 et la pièce de jonction 10c du plancher intermédiaire 10. Afin de préserver une surface d'échange 12a entre les extrémités longitudinales de l'estrade 11 et les escaliers 5, l'estrade 11 est centrée longitudinalement sur le plan inférieur 10a et possède une longueur inférieure à celle du plan inférieur 10a. La hauteur de l'estrade 11 est adaptée de sorte que sa face supérieure plane soit disposée à la même hauteur que le plan supérieur 10b.

Le volume de l'étage supérieur B peut être fermé au niveau de chacune des extrémités longitudinales du plancher intermédiaire 10 par une cloison 13, représentée uniquement sur la figure 3, la cloison 13 étant munie d'une porte coulissante 14 en regard de l'escalier 5.

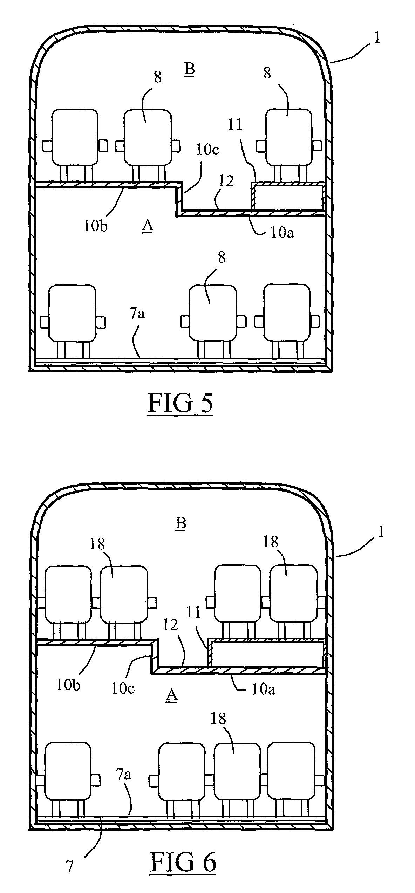

Conformément aux figures 3 et 5, le plan supérieur 10b du plancher intermédiaire 10 reçoit deux rangées de sièges 8 disposées parallèlement à l'axe longitudinal de la caisse 1, ces sièges 8 étant fixés directement au plancher intermédiaire 10 par exemple au moyen de vis de fixation. Parallèlement aux deux rangées de sièges 8 portées par le plan supérieur B, l'estrade 11 reçoit une troisième rangée de sièges 8, identiques à ceux utilisés pour former les deux premières rangées, fixés directement sur la face supérieure de l'estrade 11.

Conformément aux figures 4 et 5, le plancher 7 de l'étage inférieur A reçoit, dans la zone située sous le plan inférieur 10a du plancher intermédiaire, deux rangées de sièges 8 disposées parallèlement à l'axe longitudinal de la caisse 1, ces sièges 8 étant fixés directement sur le plancher 7. Parallèlement à ces deux rangées de sièges 8 situées sous le plan inférieur 10a, le plancher 7 reçoit également une troisième rangée de sièges 8 disposée en bordure de la paroi latérale de la caisse 1, dans la zone située sous le plan supérieur 10b du plancher intermédiaire 10. Cette troisième rangée de siège 8 est séparée des deux rangées précédentes par un espace définissant un couloir de circulation 7a, ce dernier s'étendant sous le plan supérieur 10b et bénéficiant ainsi d'une bonne hauteur sous plafond.

Le volume de l'étage inférieur A peut être fermé à ses deux extrémité longitudinales par une cloison 13, représentée uniquement sur la figure 4, munie d'une porte coulissante 14 en regard de l'escalier 6.

Une telle voiture à deux niveaux présente l'avantage de posséder un plancher intermédiaire autoporteur constitué de seulement deux plans reliés entre eux par une pièce de jonction qui est simple à réaliser et à assembler sur la caisse de la voiture. De plus, l'utilisation d'un tel plancher à deux plans décalés permet d'optimiser la hauteur sous plafond au niveau des couloirs de circulation des étages supérieur et inférieur. L'utilisation d'une estrade rapportée permet d'agencer à moindre coût l'étage supérieur en disposant une rangée de sièges, identiques à ceux des autres rangées de sièges équipant la voiture, en bordure de la paroi latérale de la caisse tout en ménageant un couloir de circulation pour les voyageurs. Une telle voiture présente également l'avantage d'avoir une structure et un agencement permettant un raccordement très simple des escaliers d'accès contribuant ainsi à la réduction du coût de fabrication de la voiture.

La figure 6 illustre, à titre d'exemple, une variante de réalisation de la voiture à deux niveaux selon l'invention. Cette variante de réalisation diffère du mode de réalisation précédemment décrit en ce que le plancher intermédiaire 10 comporte un plan supérieur 10b moins large que le plan inférieur 10a, la pièce de jonction 10c se trouvant alors décalée latéralement par rapport à l'axe longitudinale de la caisse 1. L'estrade 11 rapportée sur le plan inférieur 10a possède une largeur sensiblement équivalente à la largeur du plan supérieur 10b et un couloir de circulation 12 d'une largeur de l'ordre de 70 cm est ménagé entre la pièce de jonction 10c et le bord en regard de l'estrade 11. Conformément à la figure 5, au niveau de l'étage supérieur B, le plan supérieur 10b et l'estrade 11 reçoivent chacun deux rangées de sièges 18 accolés, disposées parallèlement à l'axe longitudinal de la caisse 1. A l'étage inférieur A, trois rangées de sièges 18 accolés sont disposées sur le plancher 7 dans la zone disposée sous le plan inférieur 10a du plancher intermédiaire 10 et une quatrième rangée de sièges 18 est disposée sous le plan supérieur 10b en bordure de la paroi latérale de la caisse 1. Un couloir de circulation 7a d'une largeur de l'ordre de 70 cm est ménagé entre la quatrième rangée de sièges 18 et les trois rangées de sièges 18 accolés, dans la zone située sous le plan supérieur 10b permettant ainsi d'avoir une bonne hauteur sous plafond.

Une telle variante de réalisation permet de réalisé un agencement différent des sièges dans les étages inférieur A et supérieur B adaptée notamment pour recevoir quatre sièges sur la largeur de la caisse.

Bien entendu, l'invention n'est nullement limitée aux modes de réalisation décrits et illustrés qui n'ont été donné qu'à titre d'exemple. Des modifications restent possibles, notamment du point de vue de la constitution des divers éléments ou par substitution d'équivalents techniques, sans sortir pour autant du domaine de protection de l'invention. Ainsi, dans une autre variante de réalisation non représentée la largeur du plan inférieur pourra également être inférieure à la largeur du plan supérieur de façon à disposer, au niveau de l'étage supérieur, trois rangées de sièges sur un coté de la voiture plus une rangée de sièges de l'autre côté avec un couloir de circulation entre les deux et, au niveau de l'étage inférieur, deux fois deux rangées de sièges séparées par un couloir de circulation.

## Revendications

1. Voiture à deux niveaux pour véhicule ferroviaire comportant une caisse (1) munie d'un plancher intermédiaire (10) réalisant la séparation entre un étage inférieur (A) et un étage supérieur (B), **caractérisé en ce que** ledit plancher intermédiaire (10) est un plancher constitué d'un plan inférieur (10a) et d'un plan supérieur (10b) décalés verticalement l'un par rapport à l'autre et reliés entre eux par une pièce de jonction (10c), les plans inférieur (10a) et supérieur (10b) s'étendant longitudinalement à la caisse (1) et comportant chacun un bord latéral relié à une paroi latérale de ladite caisse (1) et **en ce que** le plan inférieur (10a) est raccordé à un escalier (5) par au moins une de ses extrémités longitudinales, une estrade (11) supportant des sièges (8, 18) étant rapportée sur le plan inférieur (10a) en bordure de la paroi latérale de la caisse (1), ladite estrade (11) possédant une longueur et une largeur respectivement inférieures à la longueur et la largeur du plan inférieur (10a) de manière à ménager un couloir de circulation (12) entre l'estrade (11) et la pièce de jonction (10c) du plancher (10) ainsi qu'une surface d'échange (12a) entre l'extrémité longitudinale de l'estrade (11) et l'escalier (5).

2. Voiture à deux niveaux selon la revendication 1, **caractérisé en ce que** les plans inférieur (10a) et supérieur (10b) s'étendent longitudinalement sur une même longueur.

3. Voiture à deux niveaux selon l'une quelconque des revendications 1 à 2, **caractérisé en ce que** l'estrade (11) possède une face supérieure disposée à la même hauteur que le plan supérieur (10b).

4. Voiture à deux niveaux selon l'une quelconque des revendications 1 à 3, **caractérisé en ce que** des sièges (8) sont fixés directement sur le plan supérieur (10a) du plancher intermédiaire (10) et des sièges (8) de structure identique sont fixés parallèlement sur l'estrade (11).

5. Voiture à deux niveaux selon l'une quelconque des revendications 1 à 4, **caractérisé en ce qu'**au niveau de l'étage inférieur (A), au moins une rangée de sièges (8, 18) est prévue en bordure de la paroi latérale de la caisse (1) adjacente au plan supérieur (10b) et **en ce qu'**un couloir de circulation (7a) est également prévu dans la zone située sous le plan supérieur (10a).

6. Voiture à deux niveaux selon l'une quelconque des revendications 1 à 5, **caractérisé en ce que** la largeur du plan inférieur (10a) est égale à la largeur du plan supérieur (10b).

7. Voiture à deux niveaux selon l'une quelconque des revendications 1 à 5, **caractérisé en ce que** la largeur du plan inférieur (10a) est supérieure à la largeur du plan supérieur (10b) et **en ce que** la largeur de l'estrade (11) est égale à la largeur du plan supérieur (10b).

8. Voiture à deux niveaux selon l'une quelconque des revendications 1 à 7, **caractérisé en ce que** les deux extrémités longitudinales du plan inférieur (10a) sont reliées à un escalier d'accès (5) s'étendant rectilignement en bordure de la paroi latérale de la caisse (1).

9. Voiture à deux niveaux selon l'une quelconque des revendications 1 à 8, caractérisé en qu'elle comporte un palier (4) à partir duquel partent l'escalier (5) d'accès à l'étage supérieur (B) et un escalier (6) d'accès à l'étage inférieur (A), lesdits escaliers (5, 6) étant chacun disposés en bordure d'une paroi latérale la caisse (1).
